# EUROPEAN PATENT SPECIFICATION

(11) **EP 3 967 833 B1**
(45) Date of publication and mention of the grant of the patent: **07.02.2024**
(21) Application number: 21195515.8
(22) Date of filing: 08.09.2021
(51) Int. Cl.: E04H 4/00, F16L 11/08

(54) **INFLATABLE POOL WITH A PIPELINE ASSEMBLY**
AUFBLASBARES SCHWIMMBECKEN MIT EINER ROHRLEITUNGSANORDNUNG
BASSIN GONFLABLE AVEC UN ENSEMBLE PIPELINE

(30) Priority: 09.09.2020 CN 202021954526 U
(43) Date of publication of application: 16.03.2022
(73) Proprietor: Bestway Inflatables & Material Corp., Shanghai 201812 (CN)
(72) Inventor: HUANG, Shuiyong, NO. 208 JINYUANWU ROAD, SHANGHAI, 201812 (CN)
(74) Representative: Inchingalo, Simona

(56) References cited:
- WO-A1-2015/177664
- WO-A2-2020/167165
- CN-U- 209 114 919
- US-A1- 2005 000 567
- US-A1- 2014 130 930

## Description

### CROSS-REFERENCE TO RELATED APPLICATION

This Application claims priority from Chinese Application CN202021954526.0, filed September 9, 2020 in China.

### BACKGROUND

### Technical Field

The present invention relates to the technical field of above-ground pools. In particular, apparatuses and methods consistent with exemplary embodiments of the present invention relate to above-ground pools, and in particular, to an inflatable pool comprising a pipeline assembly. Examples of inflatable pools having pipeline assemblies are disclosed in documents US 2005/0000567 or in document CN 209 114 919 U.

### Description of the Related Art

An above-ground pool is a recreational product used in an outdoor space and can be installed in a domestic courtyard, garden or other space to allow multiple people to play together. Above-ground pools are widely popular due in part to their convenient installation. An above-ground pool may be a bracket pool or an inflatable pool and may have any of various structures and forms.

An above-ground pool may be provided with a filter system to clean water therein. Such a filter system often comprises a filter pump, a filter water inlet pipe, and a filter water outlet pipe. In the case of an inflatable pool, the filter water inlet pipe and the filter water outlet pipe may be partially arranged in an inflatable side wall of the pool. It has been found that, in actual application, filter water inlet pipes and filter water outlet pipes which are made of a hard material cannot be bent, and thus are inconvenient to pack and store, and may make frictional contact with the inflatable side wall, causing damage thereto. On the other hand, filter water inlet pipes and filter water outlet pipes which are made of a flexible material are prone to being compressed and flattened by air pressure within the inflatable side wall, resulting in water in the pipes not flowing smoothly, and a reduced efficiency of the filter pump.

### SUMMARY

Example embodiments may address at least the above problems and/or disadvantages and other disadvantages not described above. Also, example embodiments are not required to overcome the disadvantages described above, and may not overcome any of the problems described above.

An object of the present invention is to overcome the defects of the prior art, and to provide an improved pipeline assembly for an inflatable pool and an inflatable pool comprising the pipeline assembly.

To this end, according to an aspect of an example embodiment, the present invention provides an inflatable pool according to appended claim 1.

The reinforcer may comprise at least one supporting piece disposed along at least one of a radially-outer wall of the pipeline main body.

The plurality of reinforcing ribs and the pipeline main body may be integrally formed.

The supporting piece may comprise at least one supporting piece disposed along at least one of a radially-interior wall and a radially-outer wall of the pipeline main body.

The supporting piece may comprise a spiral spring.

The pipeline assembly comprises first and second pipeline connectors configured to connect the pipeline main body to the inflatable wall.

The pipeline connector comprises a connector main body, an attachment part disposed at an inner end of the connector main body and configured to connect to the inflatable wall; and a nut configured to attach an outer end of the connector main body and to permit passage of water therethrough.

The pipeline main body may comprise an inner end configured to communicate with the containing chamber, and an outer end configured to communicate with a filter pump external to the inflatable pool.

The inflatable wall comprises a top wall, a bottom wall, an inner side wall, and an outer side wall. The inner side wall and the bottom wall may jointly define the containing chamber.

The at least one pipeline assembly may comprise at least a first pipeline assembly configured to allow water to flow into the containing chamber and at least a second pipeline assembly configured to allow water to flow out of the containing chamber.

The reinforcer may comprise a plurality of reinforcing ribs disposed at intervals, in a longitudinal direction, along at least one of an inner wall and an outer wall of the pipeline main body.

According to one or more example embodiments, the pipeline may be easy to bend and store and also less prone to transverse deformation (such as flattening) under action of air pressure in the inflatable wall, and accordingly, water in the pipeline may flow smoothly.

### BRIEF DESCRIPTION OF THE DRAWINGS

The above and/or other aspects will become apparent and more readily appreciated from the following description of example embodiments, taken in conjunction with the accompanying drawings, in which:
FIG. 1 is a perspective view of an inflatable pool and an external filter pump arranged thereon according to an example embodiment;
FIG. 2 is a partial sectional view of the inflatable pool of FIG. 1 and a perspective view of an external filter pump arranged thereon;
FIG. 3 is a partial enlarged sectional view of the inflatable pool of FIG. 1 and FIG. 2;
FIG. 4 is a sectional view of a pipeline assembly according to an example embodiment; and
FIG. 5 is a sectional view of a pipeline assembly according to an example embodiment.

### DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.

It will be understood that the terms "include," "including", "comprise, and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term 'and/or' includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these example embodiments that are obvious to those of ordinary skill in the technical field to which these exemplary embodiments pertain may not be described here in detail.

In description, structural positions of various components, e.g., upper, lower, top, bottom, etc., are not absolute but are merely relative descriptions. Such orientation expressions are appropriate when the various components are arranged as shown in the figures but should change accordingly when the positions of the various components in the figures change.

As described herein, a longitudinal direction of a component refers to a lengthwise direction thereof; and a transverse direction of the component refers to the direction, perpendicular to the lengthwise direction, of the component.

Terms such as "connected" and "connection" should be construed in a broad sense, e.g., "connection" can be fixed connection, and can also be detachable connection, or integral connection; and "connection" can be direct connection and can also be indirect connection through an intermediate. For those of ordinary skill in the art, the specific meaning of the terms mentioned above should be construed according to specific circumstances.

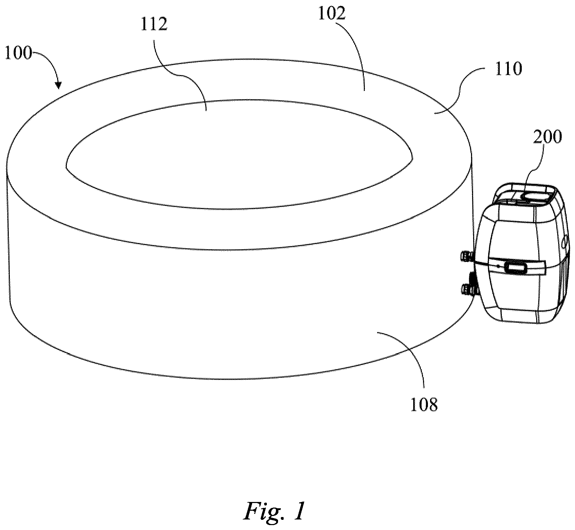

FIGs. 1 to 3 show an inflatable pool 100 and an external filter pump 200 arranged thereon according to an example embodiment.

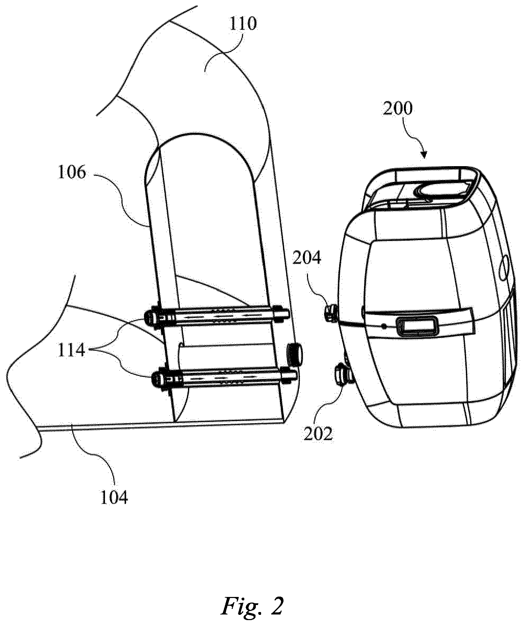

Referring to FIGs. 1 and 2, the inflatable pool 100 may comprise a top wall 102, a bottom wall 104, an inner side wall 106 and an outer side wall 108. The top wall 102, the bottom wall 104, the inner side wall 106 and the outer side wall 108 jointly define an inflatable wall 110. The inner side wall 106 and the bottom wall 104 jointly define a containing chamber 112 for containing water, wherein, the inflatable wall 110 surrounds the containing chamber 112.

According to one or more example embodiments, the top wall 102, the bottom wall 104, the inner side wall 106 and the outer side wall 108 all can be made of a flexible, rubberized fabric. Optionally, the flexible rubberized fabric can be enhanced polyvinyl chloride (PVC) rubberized fabric with one layer of net cloth being sandwiched between two layers of PVC rubberized fabric, wherein the net cloth can be either nylon net cloth or polyester net cloth. According to one or more example embodiments, the top wall 102, the bottom wall 104, the inner side wall 106 and the outer side wall 108 can be connected to one another by welding. Optionally, the top wall 102, the bottom wall 104, the inner side wall 106 and the outer side wall 108 can be connected to one another by high-frequency welding.

Referring to FIGs. 1 to 3, in the example embodiment shown, the inflatable pool 100 has a roughly circular shape. Alternately, as would be understood by one of skill in the art, the inflatable pool 100 can also have any of various other shapes, including, but not limited to an elliptical shape, a square shape, and a rectangular shape.

It should be noted that, as described herein, the term "inner" is used to refer to an element or direction towards an interior of the containing chamber 112 (e.g. radially inward in a case in which the containing chamber 112 is circular), and the term "outer" is used to refer to an element or direction towards an exterior of the containing chamber 112 (e.g. radially outward in a case in which the containing chamber 112 is circular).

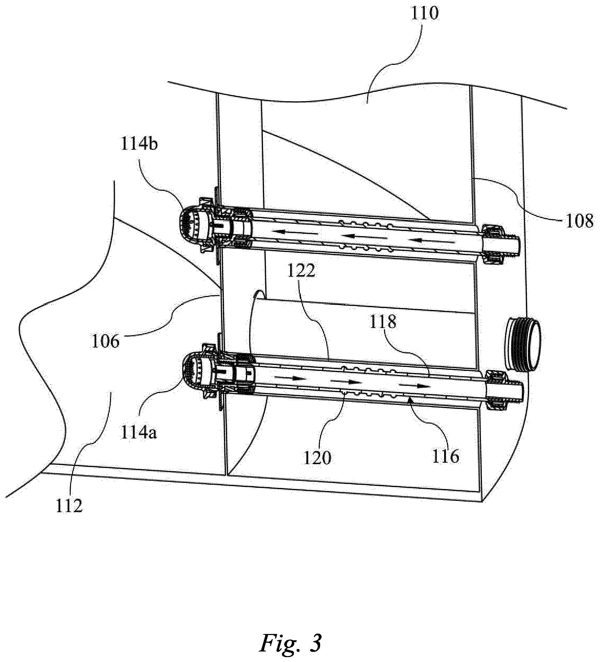

The inflatable pool 100 may comprise two pipeline assemblies 114a, 114b (the pipeline assemblies 114a, 114b can be collectively referred to as the pipeline assembly 114), and the inflatable pool 110 may be provided with an external filter pump 200. The external filter pump 200 may comprise a water inlet 202 and a water outlet 204. The water inlet 202 and the water outlet 204 of the external filter pump 200 can communicate with the containing chamber 112 via the pipeline assembly 114a and the pipeline assembly 114b. Thus, as shown by the arrows of FIG. 3, water in the containing chamber 112 can flow into the external filter pump 200 through the pipeline assembly 114a and the water inlet 202 to be filtered in the external filter pump 200; and water in the external filter pump 200 may then flow back into the containing chamber 112 through the water outlet 204 and the pipeline assembly 114b. Accordingly, water in the containing chamber 112 is subjected to circulating filtration.

Referring to FIG. 3, according to this example embodiment, each of the pipeline assemblies 114a and 114b comprises a pipeline 116. The pipeline 116 is suitable for extending at least partially through the inflatable wall 110 of the inflatable pool 100 and for communicating with the containing chamber 112 of the inflatable pool 100. The pipeline 116 comprises a pipeline main body 118 and a reinforcer 120. The pipeline main body 118 is made of a flexible material. The reinforcer 120 is arranged along at least part of a longitudinal section of the pipeline main body 118 located within the inflatable wall 110 and assists in preventing transverse deformation of the pipeline main body 118. The design of the pipeline 116, combining the flexible pipeline main body 118 with the reinforcer 120, assists in enabling the pipeline 116 to be easy to bend and store and while also being less prone to transverse deformation (such as flattening) due to air pressure within the inflatable wall 110. Accordingly, the design of the pipeline 116 helps ensure that water in the pipeline 116 flows smoothly, and that the external filter pump 200 can maintain a high filter efficiency.

The pipeline main body 118 is at least partially arranged within the inflatable wall 110 of the inflatable pool 100. The inflatable wall 110 comprises sleeves 122 extending therethrough. Each sleeve 122 extends in a longitudinal direction from an inner end thereof, which is in sealing connection with the inner side wall 106, to an outer end thereof, which is in sealing connection with the outer side wall 108, thereby ensuring the air tightness of the inflatable wall 110. The sleeves 122 can be made of a material which is the same as that of the inner side wall 106 and the outer side wall 108 and is connected to the inner side wall 106 and the outer side wall 108 through welding. The pipeline main body 118 is at least partially disposed within the sleeve 122. The flexible material of the pipeline main body 118 may be a thermoplastic elastomer (TPE) or a thermoplastic resin which deforms easily, such as polyvinyl chloride (PVC), thermoplastic polyurethane (TPU), vulcanized silicone, polyvinylidene fluoride (PVDF) or polytetrafluoroethylene (PTFE), or another plastic material with similar properties, as would be understood by one of skill in the art.

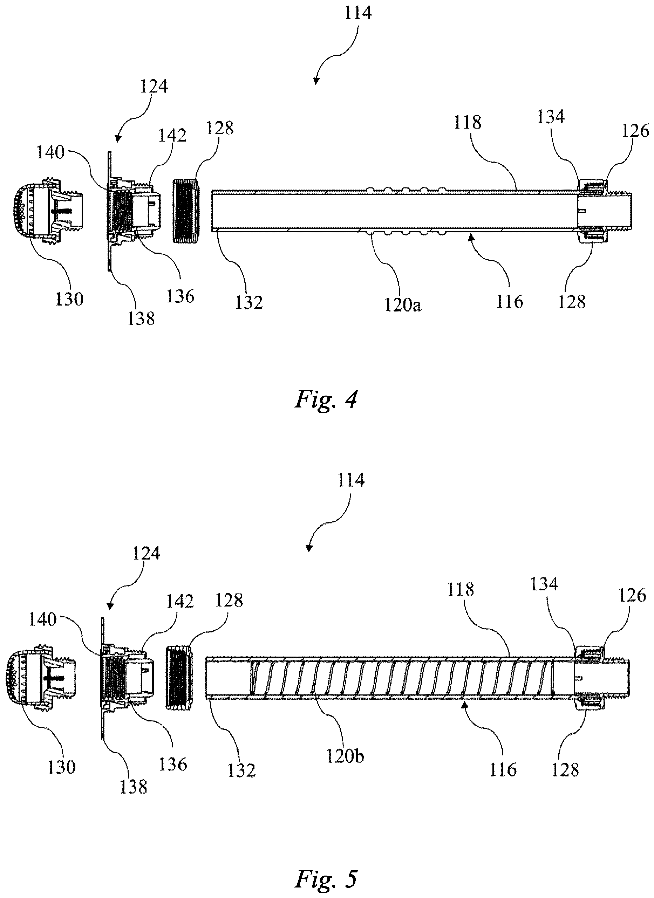

The reinforcer 120 is disposed along at least part of a longitudinal section of the pipeline main body 118 within the sleeve 122, and aids in the prevention of transverse deformation of the pipeline main body 118. Thus, the reinforcer 120 helps prevent transverse deformation of the pipeline main body 118 due to air pressure within the inflatable wall 110, thus also helping aid in the smooth flow of water though the pipeline main body 118. Optionally, each reinforcer 120 may comprise a plurality of reinforcing ribs 120a, preferably they are reinforcing convex ribs, as shown in FIG. 4, or supporting pieces 120b, as shown in FIG. 5.

In the example embodiment shown in FIG. 4, the reinforcer 120 comprises a plurality of reinforcing ribs 120a, e.g. five as shown in FIG. 4, arranged on an outer wall of the pipeline main body 118. Here, the five reinforcing ribs or reinforcing convex ribs 120a extend in a at least a partially circumferential direction of the pipeline main body 118 and are arranged at intervals in the longitudinal direction of the pipeline main body 118. The extension of the reinforcing ribs 120a in the at least partially circumferential direction of the pipeline main body 118 can aid in improving the rigidity of the pipeline 116 in the transverse direction, and help prevent transverse deformation of the pipeline 116. The reinforcing ribs 120a may be arranged along equal or unequal intervals of the longitudinal direction of the pipeline main body 118 so that the pipeline 116 may be bent and conveniently packed or stored. As shown, the reinforcing ribs 120a are arranged on the outer wall of the pipeline main body 118. However, they may alternately be arranged on the inner wall of the pipeline main body 118, or along both the inner wall and the outer wall of the pipeline main body 118. The quantity, interval, and positioning of the reinforcing convex ribs 120a can be selected according to actual requirements. According to an example aspect, the reinforcing ribs 120a and the pipeline main body 118 may be integrally formed.

In the example embodiment shown in FIG. 5, the reinforcer 120 comprises a supporting piece 120b which is disposed within the pipeline main body 118 and extends, at least partially, in the longitudinal direction of the pipeline main body 118. The material hardness of the supporting piece 120b is higher than that of the pipeline main body 118; accordingly, transverse support is provided for the pipeline main body 118, and transverse deformation of the pipeline 116 is at least partially alleviated. In the example embodiment shown, the supporting piece 120b is in the form of a spiral spring, and the pipeline 116 can be folded or bent, due to the compressibility and bendability of the spiral spring, and thus may be convenient to pack or store. The supporting piece 120b may also take any of a number of other appropriate forms, such as a hard corrugated pipe. Alternately, the supporting piece 120b may be arranged outside the pipeline main body 118, e.g. in a sleeved manner, or the supporting piece or pieces 120b may be provided along both the interior and exterior of the pipeline main body 118. The quantity, length, and position of the supporting pieces 120b may be selected according to actual requirements.

As shown in FIG. 3 to 5, the pipeline assembly 114 comprises a first pipeline connector 124, a second pipeline connector 126, a nut 128, and an end cover 130.

Referring to Figs. 4 and 5, the pipeline main body 118 comprises a first (inner) end 132 and a second (outer) end 134. The first end 132 can be connected to the inner side wall 106 of the inflatable pool 100 via the first pipeline connector 124, and the second end 134 can be connected to the external filter pump 200 via the second pipeline connector 126. Thus, the pipeline main body may communicate with the containing chamber 112 and a water inlet 202 or water outlet 204 of the external filter pump 200.

The first pipeline connector 124 comprises a connector main body 136 and an attachment part 138. The connector main body 136 comprises a first (inner) connection end 140 and a second (outer) connection end 142. The attachment part 138 is arranged surrounding the first (inner) connection end 140 of the connector main body 136 and is connected to the connector main body 136. The attachment part 138 may be subjected to injection molding by a thermoplastic polymer to be formed at the first (inner) connection end 140 of the connector main body 136. The first (inner) end 132 of the pipeline main body 118 can be connected to the second (outer) connection end 142 of the connector main body 136 via the nut 128, and the attachment part 138 at the first (inner) connection end 140 of the connector main body 136 can be connected to the inner side wall 106 of the inflatable pool 100, so that the pipeline main body 118 can be connected to the inner side wall 106 of the inflatable pool 100 through the first (inner) pipeline connector 124.

Opposite ends of the second (outer) pipeline connector 126 can be connected to the second (outer) end 134 of the pipeline main body 118 and to the water inlet 202 or water outlet 204 of the external filter pump 200, respectively.

An end cover 130 can be connected to the first (inner) connection end 140 of the first (inner) pipeline connector 124. The end cover 130 is located in the containing chamber 112 and can include one or more of holes, grids and the like with appropriate configurations and dimensions so as to allow water to flow into or out of the containing chamber 112 via the end cover 130. Leaves and other impurities in the water in the containing chamber 112 can be prevented from entering the pipeline 116 and the external filter pump 200, due to the end cover 130.

The pipeline assembly is described above with respect to example embodiments in which the pipeline assembly is used for enabling a containing chamber, for containing water, of an inflatable pool to be in fluid communication with an external filter pump. Alternately, the pipeline assembly may be applied to any of various other application scenarios where water needs to be led out of or into a containing chamber of an inflatable pool or other such container. For example, the pipeline assembly may be used for injecting water into a containing chamber of an inflatable pool or discharging water inside the containing chamber of an inflatable pool without communicating with an external filter pump.

It should be understood that the example embodiments shown in FIGs. 1 to 5 only show the shapes, dimensions and arrangements of various optional components of an inflatable pool and a pipeline assembly, and are merely illustrative but not restrictive, and other shapes, dimensions, and arrangements may be employed, as would be understood by one of skill in the art.

Those skilled in the art may make various variations and improvements to the concepts described above under the inventive concept of example embodiments. The descriptions of the above example embodiments are illustrative and not restrictive.

It may be understood that the exemplary embodiments described herein may be considered in a descriptive sense only and not for purposes of limitation. Descriptions of features or aspects within each exemplary embodiment may be considered as available for other similar features or aspects in other exemplary embodiments.

While exemplary embodiments have been described with reference to the figures, it will be understood by those of ordinary skill in the art that various changes in form and details may be made therein without departing from the scope of protection of the present invention as defined by the claims.

## Claims

1. An inflatable pool, comprising:
an inflatable wall (110) defining therein a containing chamber (112) configured to contain water; the inflatable wall (110) comprising at least one sleeve (122) extending therethrough in a longitudinal direction from an inner wall to an outer wall of the inflatable wall (110); and
at least one pipeline assembly (114) comprising:
a pipeline (116) configured to extend at least partially through the inflatable wall (110), to thereby communicate, at an inner end thereof, with said containing chamber (112) of the inflatable pool (100), the pipeline (116) comprising:
a main body (118), made of a flexible material, at least partially disposed within the sleeve (122) and comprising an inner end (132) configured to communicate with the containing chamber (112);
a reinforcer (120) disposed along at least part of a longitudinal section of the main body (118), the reinforcer (120) being less flexible, in a direction transverse to the longitudinal section, than the main body (118);
wherein the at least one pipeline assembly (114) further comprises:
a first pipeline connector (124) and a second pipeline connector (126) configured to connect the main body (118) to the inflatable wall (110);
the first pipeline connector (124) comprising:
a connector main body (136);
an attachment part (138) disposed at an inner end (140) of the connector main body (136) and configured to connect to the inflatable wall (110); and
a nut (128) configured to attach an outer end (142) of the connector main body (136) to the inner end (132) of the main body (118);
wherein the inflatable pool further comprises an end cover (130) configured to connect to the inner end (140) of the connector main body (136) and to permit passage of water therethrough.

2. The inflatable pool according to claim 1, wherein the inflatable wall (110) comprises a top wall (102), a bottom wall (104), an inner side wall (106) and an outer side wall (108), wherein the inner side wall (106) and the bottom wall (104) jointly define the containing chamber (112).

3. The inflatable pool according to claim 2, wherein the at least one pipeline assembly (114) comprises at least a first pipeline assembly (114a) configured to allow water to flow into the containing chamber (112) and at least a second pipeline assembly (114b) configured to allow water to flow out of the containing chamber (112).

4. The inflatable pool according to claim 1, wherein the reinforcer (120) comprises:
a plurality of reinforcing ribs (120a) disposed at intervals, in a longitudinal direction, along at least one of an inner wall and an outer wall of the main body (118); the plurality of reinforcing ribs (120a) and the main body (118) being integrally formed.

5. The inflatable pool according to claim 1, wherein the reinforcer (120) comprises:
at least one supporting piece (120b) disposed along at least one of a radially-interior wall and a radially-outer wall of the main body; wherein the supporting piece (102b) comprising a spiral spring.

6. The inflatable pool according to claim 1, wherein the main body (118) further comprises an outer end (134) configured to communicate with a filter pump (200) external to the inflatable pool (100).

7. The inflatable pool according to claim 1, wherein it comprises two pipeline assemblies (114a, 114b) and two sleeves (122), each one for housing a pipeline assembly (114).

8. The inflatable pool according to claims 6 and 7, wherein the filter pump (200) comprises a water inlet (202) and a water outlet (204); the water inlet (202) and the water outlet (204) communicating with the containing chamber (112) via a corresponding pipeline assembly (114a, 114b).

## Patentansprüche

1. Aufblasbares Schwimmbecken, umfassend:
eine aufblasbare Wand (110), die darin eine Aufnahmekammer (112) definiert, die dazu ausgelegt ist, Wasser aufzunehmen; wobei die aufblasbare Wand (110) mindestens eine Hülse (122) umfasst, die sich in einer Längsrichtung von einer Innenwand zu einer Außenwand der aufblasbaren Wand (110) erstreckt; und
mindestens eine Rohrleitungsanordnung (114), umfassend: eine Rohrleitung (116), die dazu ausgelegt ist, sich zumindest teilweise durch die aufblasbare Wand (110) zu erstrecken, um dadurch an einem inneren Ende davon mit der Aufnahmekammer (112) des aufblasbaren Schwimmbeckens (100) zu kommunizieren, wobei die Rohrleitung (116) Folgendes umfasst:
einen Hauptkörper (118), der aus einem flexiblen Material hergestellt ist, zumindest teilweise innerhalb der Hülse (122) angeordnet ist und ein inneres Ende (132) umfasst, das dazu ausgelegt ist, mit der Aufnahmekammer (112) zu kommunizieren;
eine Verstärkung (120), die entlang mindestens eines Teils einer Längssektion des Hauptkörpers (118) angeordnet ist, wobei die Verstärkung (120) in einer Richtung quer zur Längssektion weniger flexibel ist als der Hauptkörper (118);
wobei die mindestens eine Rohrleitungsanordnung (114) ferner Folgendes umfasst:
einen ersten Rohrleitungsverbinder (124) und einen zweiten Rohrleitungsverbinder (126), die dazu ausgelegt sind, den Hauptkörper (118) mit der aufblasbaren Wand (110) zu verbinden;
wobei der erste Rohrleitungsverbinder (124) Folgendes umfasst:
einen Verbinderhauptkörper (136);
ein Anbringungsteil (138), das an einem inneren Ende (140) des Verbinderhauptkörpers (136) angeordnet und dazu ausgelegt ist, sich mit der aufblasbaren Wand (110) zu verbinden; und
eine Mutter (128), die dazu ausgelegt ist, ein äußeres Ende (142) des Verbinderhauptkörpers (136) an dem inneren Ende (132) des Hauptkörpers (118) anzubringen;
wobei das aufblasbare Schwimmbecken ferner eine Endabdeckung (130) umfasst, die dazu ausgelegt ist, sich mit dem inneren Ende (140) des Verbinderhauptkörpers (136) zu verbinden und den Durchtritt von Wasser zu ermöglichen.

2. Aufblasbares Schwimmbecken nach Anspruch 1, wobei die aufblasbare Wand (110) eine obere Wand (102), eine untere Wand (104), eine innere Seitenwand (106) und eine äußere Seitenwand (108) umfasst, wobei die innere Seitenwand (106) und die untere Wand (104) gemeinsam die Aufnahmekammer (112) definieren.

3. Aufblasbares Schwimmbecken nach Anspruch 2, wobei die mindestens eine Rohrleitungsanordnung (114) mindestens eine erste Rohrleitungsanordnung (114a), die ausgelegt ist, um zu ermöglichen, dass Wasser in die Aufnahmekammer (112) fließt, und mindestens eine zweite Rohrleitungsanordnung (114b), die ausgelegt ist, um zu ermöglichen, dass Wasser aus der Aufnahmekammer (112) fließt, umfasst.

4. Aufblasbares Schwimmbecken nach Anspruch 1, wobei die Verstärkung (120) Folgendes umfasst:
eine Vielzahl von Verstärkungsrippen (120a), die in Abständen in einer Längsrichtung entlang mindestens einer zwischen einer Innenwand und einer Außenwand des Hauptkörpers (118) angeordnet sind; wobei die Vielzahl von Verstärkungsrippen (120a) und der Hauptkörper (118) einstückig ausgebildet sind.

5. Aufblasbares Schwimmbecken nach Anspruch 1, wobei die Verstärkung (120) Folgendes umfasst:
mindestens ein Stützteil (120b), das entlang mindestens einer zwischen einer radial inneren Wand und einer radial äußeren Wand des Hauptkörpers angeordnet ist; wobei das Stützteil (102b) eine Spiralfeder umfasst.

6. Aufblasbares Schwimmbecken nach Anspruch 1, wobei der Hauptkörper (118) ferner ein äußeres Ende (134) umfasst, das dazu ausgelegt ist, mit einer Filterpumpe (200) außerhalb des aufblasbaren Schwimmbeckens (100) zu kommunizieren.

7. Aufblasbares Schwimmbecken nach Anspruch 1, wobei es zwei Rohrleitungsanordnungen (114a, 114b) und zwei Hülsen (122) umfasst, von denen eine jede eine Rohrleitungsanordnung (114) aufnimmt.

8. Aufblasbares Schwimmbecken nach den Ansprüchen 6 und 7, wobei die Filterpumpe (200) einen Wassereinlass (202) und einen Wasserauslass (204) umfasst; wobei der Wassereinlass (202) und der Wasserauslass (204) über eine entsprechende Rohrleitungsanordnung (114a, 114b) mit der Aufnahmekammer (112) kommuniziert.

## Revendications

1. Bassin gonflable, comprenant :
une paroi gonflable (110) définissant en son sein une chambre de contenance (112) configurée pour contenir de l'eau ; la paroi gonflable (110) comprenant au moins un manchon (122) se prolongeant à travers elle dans une direction longitudinale d'une paroi intérieure à une paroi extérieure de la paroi gonflable (110) ; et
au moins un ensemble pipeline (114), comprenant :
un pipeline (116) configuré pour se prolonger au moins partiellement à travers la paroi gonflable (110), pour communiquer ainsi, à une extrémité intérieure de celle-ci, avec ladite chambre de contenance (112) du bassin gonflable (100), le pipeline (116) comprenant :
un corps principal (118), en matériau souple, disposé au moins partiellement à l'intérieur du manchon (122) et comprenant une extrémité intérieure (132) configurée pour communiquer avec la chambre de contenance (112) ;
un renfort (120) disposé le long d'au moins une partie d'une section longitudinale du corps principal (118), le renfort (120) étant moins souple, dans une direction transversale à la section longitudinale, que le corps principal (118) ;
dans lequel l'au moins un ensemble pipeline (114) comprend de plus :
un premier connecteur de pipeline (124) et un deuxième connecteur de pipeline (126) configurés pour relier le corps principal (118) à la paroi gonflable (110) ;
le premier connecteur de pipeline (124) comprenant :
un corps principal de connecteur (136) ;
une pièce de fixation (138) disposée à une extrémité intérieure (140) du corps principal du connecteur (136) et configurée pour se raccorder à la paroi gonflable (110) ; et
un écrou (128) configuré pour fixer une extrémité extérieure (142) du corps principal du connecteur (136) à l'extrémité intérieure (132) du corps principal (118) ;
dans lequel le bassin gonflable comprend de plus un recouvrement d'extrémité (130) configuré pour se raccorder à l'extrémité intérieure (140) du corps principal du connecteur (136) et pour permettre le passage de l'eau à travers celui-ci.

2. Bassin gonflable selon la revendication 1, dans lequel la paroi gonflable (110) comprend une paroi supérieure (102), une paroi inférieure (104), une paroi latérale intérieure (106) et une paroi latérale extérieure (108), dans lequel la paroi latérale intérieure (106) et la paroi inférieure (104) définissent conjointement la chambre de contenance (112).

3. Bassin gonflable selon la revendication 2, dans lequel l'au moins un ensemble pipeline (114) comprend au moins un premier ensemble pipeline (114a) configuré pour permettre à l'eau de s'écouler dans la chambre de contenance (112) et au moins un deuxième ensemble pipeline (114b) configuré pour permettre à l'eau de s'écouler hors de la chambre de contenance (112).

4. Bassin gonflable selon la revendication 1, dans lequel le renfort (120) comprend :
une pluralité de nervures de renforcement (120a) disposées à intervalles, dans une direction longitudinale, le long d'au moins une paroi intérieure et une paroi extérieure du corps principal (118) ; la pluralité de nervures de renforcement (120a) et le corps principal (118) étant formés d'un seul tenant.

5. Bassin gonflable selon la revendication 1, dans lequel le renfort (120) comprend :
au moins une pièce de support (120b) disposée le long d'au moins une paroi radialement intérieure et une paroi radialement extérieure du corps principal ; la pièce de support (102b) comprenant un ressort spiral.

6. Bassin gonflable selon la revendication 1, dans lequel le corps principal (118) comprend de plus une extrémité extérieure (134) configurée pour communiquer avec une pompe à filtre (200) externe au bassin gonflable (100).

7. Bassin gonflable selon la revendication 1, dans lequel il comprend deux ensembles pipelines (114a, 114b) et deux manchons (122), chacun pour loger un ensemble pipeline (114).

8. Bassin gonflable selon les revendications 6 et 7, dans lequel la pompe à filtre (200) comprend une entrée d'eau (202) et une sortie d'eau (204) ; l'entrée d'eau (202) et la sortie d'eau (204) communiquant avec la chambre de contenance (112) par l'intermédiaire d'un ensemble pipeline (114a, 114b) correspondant.
